# EUROPEAN PATENT APPLICATION

(11) **EP 4 642 022 A1**
(43) Date of publication of application: **29.10.2025**
(21) Application number: 25169092.1
(22) Date of filing: 08.04.2025
(51) Int. Cl.: H04N 7/15, H04L 12/18

(54) **METHOD, APPARATUS, AND COMPUTER PROGRAM FOR AUTOMATICALLY GENERATING TEXT USING GENERATIVE AI**

(30) Priority: 23.04.2024 KR 20240053713; 21.10.2024 KR 20240144292
(71) Applicant: Samsung SDS Co., Ltd., Seoul 05510 (KR)
(72) Inventor: Yoon, Heetae, 05510 Seoul (KR)
(74) Representative: Grünecker Patent- und Rechtsanwälte PartG mbB

(57) **Abstract**

The disclosure relates to a method, an apparatus, and a computer program for automatically generating text using generative AI. A method for automatically generating text using generative AI of the disclosure may include: determining whether or not there is a change between frames constituting images; extracting text from a changed frame; and generating first text by combining the extracted text with previously extracted text.

## Description

### BACKGROUND OF THE INVENTION

### 1. Field of the invention

The disclosure relates to a method, an apparatus, and a computer program for automatically generating text. Specifically, the disclosure relates to a method, an apparatus, and a computer program for automatically generating text using generative AI. More specifically, the disclosure relates to a method, an apparatus, and a computer program for automatically generating meeting minutes, action items, and questions/answers (Q&As) using generative AI.

### 2. Description of the Prior Art

Recently, video conference systems that allow meeting participants to share various content through a screen have proliferated for frequent cases where content such as documents, images, and videos is required to be shared during meetings.

When sharing content through screen sharing in the video conference system, screen sharing is performed by capturing the video currently displayed on the screen, compressing it into a video using a video codec such as H.264, and then transmitting the compressed video. This screen sharing method has the advantage of allowing free sharing of various types of content such as video sharing or animation processing, and is being adopted as a standard method in many video conference systems.

However, most of the content shared through screen sharing in video conference systems is text-based content such as Word or PowerPoint (ppt) content. When sharing the screen of a meeting participant (screen sharing) in a meeting and sharing text-based content on the screen, only a text display video compressed using a video codec is shared, so it is difficult to check what content was shared during the meeting or search for the same later. In addition, unless the video being shared is recorded and played back later to check the content one by one, it is difficult to identify the specific meeting content later or to check or determine whether the meeting participants shared information with a high security risk.

That is, there is a need for an effective automatic document generation method, such as checking the video conference content later or summarizing meeting minutes for identifying the security-related information, but there is no appropriate solution to this yet.

### SUMMARY OF THE INVENTION

The disclosure has been made to solve the problems of the conventional technology described above, and is to provide a method, an apparatus, and a computer program for automatically generating text using generative AI.

In addition, the disclosure is to provide a method, an apparatus, and a computer program for automatically generating meeting minutes, action items, and questions/answers (Q&As) using generative AI.

In addition, the disclosure is to provide a method, an apparatus, and a computer program for generating meeting minutes with improved generation accuracy using generative AI in a video conference system.

In addition, the disclosure is to provide a method, an apparatus, and a computer program for improving the generation accuracy of meeting minutes by extracting text from a shared screen of a video conference system and utilizing the extracted text.

In addition, the disclosure is to provide a method, an apparatus, and a computer program for effectively monitoring data shared during a meeting by extracting text from a shared screen of a video conference system and utilizing the extracted text.

In addition, the disclosure is to provide a method, an apparatus, and a computer program capable of extracting text from a shared screen of a video conference system and using the same, enabling a security officer to identify the content shared in a meeting or a late attendee to understand the content shared in a meeting.

In addition, the disclosure is to provide a method, an apparatus, and a computer program capable of recognizing, if a shared screen has been changed in a video conference system, that a page has been changed and generating a linked shared text based on the page change.

In addition, the disclosure is to provide a method, an apparatus, and a computer program capable of recognizing, if a shared screen has been changed in a video conference system, that a page has been changed and managing writing data based on the page change.

The technical problems to be solved in the disclosure are not limited to the technical problems mentioned above, and other technical problems not mentioned will be clearly understood by those skilled in the art to which the disclosure belongs from the description of this specification.

According to the first aspect of the disclosure, a method for automatically generating text using generative AI may include: determining whether or not there is a change between frames constituting images; extracting text from a changed frame; and generating first text by combining the extracted text with previously extracted text.

Here, the determining whether or not there is a change between frames may be performed by at least one of determining whether or not there is a change between frames using a screen update event provided from an operating system (OS), determining whether or not there is a change between frames using the amount of pixel change between a previous frame and a current frame, and determining whether or not there is a change between frames using a frame size generated through a video codec.

Here, the extracting of the text may be executed using an OCR module.

Here, the previously extracted text may be text extracted from a frame prior to the changed frame.

Here, the combination of the extracted text and the previously extracted text may be performed by removing redundant portions.

Here, a position of combination of the extracted text and the previously extracted text may be a criterion for dividing the first text into topic units.

In addition, the method may further include generating second text by adding voice text to the first text.

Here, the voice text may be obtained by converting speech data through speech-to-text (STT).

Here, a position of combination of the extracted text and the previously extracted text may be a criterion for dividing the second text into topic units.

In addition, the method may further include generating a topic-based meeting summary or a topic-based action item from the second text.

According to the second aspect of the disclosure, there may be provided a computer program stored in a medium for executing, in conjunction with hardware, a method of automatically generating text using generative AI.

According to the third aspect of the disclosure, an apparatus for automatically generating text using generative AI may include a processor, wherein the processor may be configured to determine whether or not there is a change between frames constituting images; extract text from a changed frame; and generate first text by combining the extracted text with previously extracted text.

Here, the processor may be configured to determine whether or not there is a change between frames by at least one of determining whether or not there is a change between frames using a screen update event provided from an operating system (OS), determining whether or not there is a change between frames using the amount of pixel change between a previous frame and a current frame, and determining whether or not there is a change between frames using a frame size generated through a video codec.

Here, the processor may be configured to extract the text using an OCR module.

Here, the previously extracted text may be text extracted from a frame prior to the changed frame.

Here, the combination of the extracted text and the previously extracted text may be performed by removing redundant portions.

Here, a position of combination of the extracted text and the previously extracted text may be a criterion for dividing the first text into topic units.

In addition, the processor may be configured to further generate second text by adding voice text to the first text.

Here, the voice text may be obtained by converting speech data through speech-to-text (STT).

Here, a position of combination of the extracted text and the previously extracted text may be a criterion for dividing the second text into topic units.

In addition, the processor may be configured to further generate a topic-based meeting summary or a topic-based action item from the second text.

Accordingly, in the method, apparatus, and computer program for automatically generating text using generative AI according to an embodiment of the disclosure, it is possible to generate meeting minutes, action items, and questions/answers (Q&As) using generative AI.

In addition, in the method, apparatus, and computer program for automatically generating text using generative AI according to an embodiment of the disclosure, it is possible to generate meeting minutes with improved generation accuracy using generative AI in a video conference system.

In addition, in the method, apparatus, and computer program for automatically generating text using generative AI according to an embodiment of the disclosure, it is possible to improve the generation accuracy of meeting minutes by extracting text from a shared screen of a video conference system and utilizing the extracted text.

In addition, in the method, apparatus, and computer program for automatically generating text using generative AI according to an embodiment of the disclosure, it is possible to effectively monitor data shared during a meeting by extracting text from a shared screen of a video conference system and utilizing the extracted text.

In addition, in the method, apparatus, and computer program for automatically generating text using generative AI according to an embodiment of the disclosure, it is possible to extract text from a shared screen of a video conference system and using the same, thereby enabling a security officer to identify the content shared in a meeting or a late attendee to understand the content shared in a meeting.

In addition, in the method, apparatus, and computer program for automatically generating text using generative AI according to an embodiment of the disclosure, it is possible to recognize, if a shared screen has been changed in a video conference system, that a page has been changed and generate a linked shared text based on the page change.

In addition, in the method, apparatus, and computer program for automatically generating text using generative AI according to an embodiment of the disclosure, it is possible to recognize, if a shared screen has been changed in a video conference system, that a page has been changed and manage writing data based on the page change.

The effects that can be obtained from the disclosure are not limited to the effects mentioned above, and other effects that are not mentioned can be clearly understood by a person having ordinary knowledge in the technical field to which the disclosure belongs from the contents described in this specification.

### BRIEF DESCRIPTION OF THE DRAWINGS

The attached drawings are incorporated as part of the detailed description to help understanding of the disclosure and describe embodiments and technical features of the disclosure along with the detailed description.
FIG. 1 is a flowchart illustrating a method for automatically generating text using generative AI according to an embodiment of the disclosure.
FIG. 2 is a flowchart illustrating a method for automatically generating questions/answers (Q&As) using generative AI according to an embodiment of the disclosure.
FIG. 3 is a flowchart illustrating a method for automatically generating text using generative AI according to an embodiment of the disclosure.
FIG. 4 is a flowchart illustrating an apparatus for automatically generating text using generative AI according to an embodiment of the disclosure.
FIG. 5 illustrates an apparatus to which the proposed method of the disclosure may be applied.

### DETAILED DESCRIPTION OF THE EXEMPLARY EMBODIMENTS

Hereinafter, the embodiments disclosed in this specification will be described in detail with reference to the attached drawings. The purpose, specific advantages, and novel features of the disclosure will become more apparent from the following detailed description and preferred embodiments associated with the attached drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Identical or similar components will be assigned the same reference numerals, regardless of the reference numerals, and redundant descriptions thereof will be omitted. The terms "module" and "unit" used for components in the following description are assigned or used interchangeably only in consideration of the ease of drafting the specification, and do not have distinct meanings or roles in themselves, which may indicate software or hardware components.

In describing the components of the disclosure, if singular expressions should be understood to encompass a plurality of components unless specifically stated otherwise. Although "first," "second," etc. are used to distinguish one component from another component, and components are not limited to these terms. In addition, the case where a component is connected to another component, it may indicate that another component may be connected between the two components.

In addition, when describing the embodiments disclosed in this specification, a specific description of a related known technology, which may obscure the subject matter of the embodiments disclosed in this specification, will be omitted. In addition, the attached drawings are only intended to facilitate easy understanding of the embodiments disclosed in this specification, and the technical ideas disclosed in this specification are not limited to the attached drawings, and should be understood to encompass all modifications, equivalents, or substitutes included in the scope of the disclosure.

Hereinafter, exemplary embodiments of a method, an apparatus, and a computer program for automatically generating text using generative AI according to an embodiment of the disclosure will be described in detail with reference to the attached drawings.

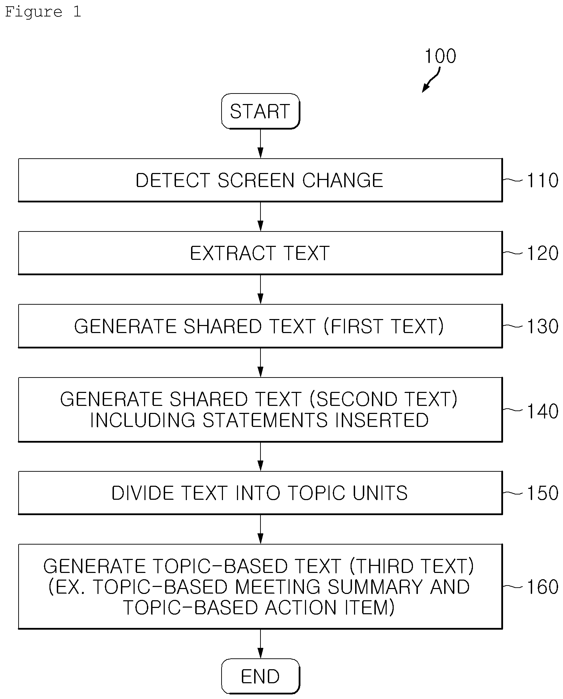

FIG. 1 is a flowchart illustrating a method 100 for automatically generating text using generative AI according to an embodiment of the disclosure.

The embodiment presented in FIG. 1 illustrates a method for automatically generating topic-based summarized meeting minutes or topic-based summarized action items using generative AI.

When conducting a conference through a video conference system, various content such as shared documents/videos/images, images of other conference participants, and the like is displayed as images on the video conference application screen of each conference participant. These images are captured and transmitted to other conference participants through video compression, thereby sharing the content. Since video compression and video transmission are based on the prior art, detailed descriptions thereof will be omitted.

Screen change may be detected by determining whether or not there is a change between frames constituting the captured images (110). Whether or not there is a change between frames may be determined in various ways. For example, it is possible to determine whether or not there is a change between frames through a screen update event provided from an operating system (OS), to determine the same by measuring the amount of pixel change between the previously captured video image (previous frame) and the currently captured video image (current frame), or to determine the same, based on a size of the frame generated through a video codec.

If it is determined that there is a change between frames, this indicates a change in the display on the screen viewed by the user, so it may be determined that the entirety or part of a document or the like shared in a video conference has been changed. If it is determined that the entirety or part of the shared document has been changed, text is extracted from the changed video frame (120). At this time, text extraction may be performed using an OCR (Optical Character Recognition) module, but the text extraction method is not limited thereto.

The extracted text is compared with previously extracted text and combined into a single whole text (first text) (130) . At this time, the combination of the previously extracted text and the currently extracted text is performed by removing redundant parts. Even if a single whole text is produced, the change position or change time within the text (combination position or combination time within the text) due to the change between frames (or screen change or change between frames) may be stored separately. The change position or change time within the text (combination position or combination time within the text) may be the criteria for dividing the text (first text or second text) in units of topics later.

The text (first text) created as a shared text by combining the entire content may be generated into a final text (second text) by further reflecting the text (speech text or voice text) of speech data (transcript data) of meeting participants (140). Here, the speech text (voice text) is obtained by converting the speech data of the meeting participants through speech-to-text (STT).

The generated final text may be divided and organized into topic units, and in this case, the final text may be divided into topic units by analyzing the linguistic content of the final text or may be divided into topic units, based on the change between frames (or screen changes) (150).

Next, a topic-based meeting summary may be generated from the final text divided into topic units, and a topic-based action item may be generated from the final text divided into topic units (meeting summary and action items: third text) (160). The third text may also be generated by generative AI.

In the disclosure, if it is determined that the video has been changed (or if it is determined that the video has been changed to a certain degree or more) as a result of identifying the change information of the video when sharing the video, the page of a document being shared may be regarded as having been changed, and the corresponding screen may be captured and text may be extracted therefrom using OCR, thereby managing the same. Through this, the screen-shared video may be automatically extracted into text, and the extracted text information may be utilized such as performing searching thereon. That is, the disclosure is to extract text from content shared in the form of a video stream and utilize it.

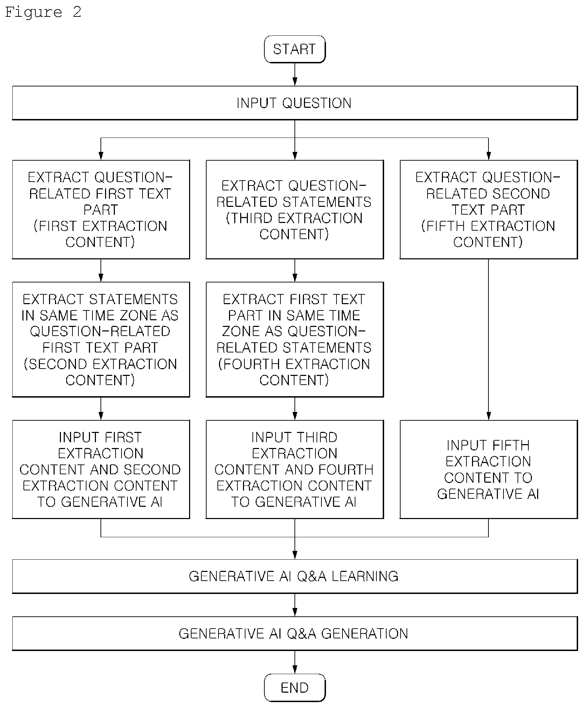

FIG. 2 is a flowchart illustrating a method for automatically generating questions/answers (Q&As) using generative AI according to an embodiment of the disclosure.

When a question is input, generative AI may generate a response (answer) to it and learn from that, thereby generating a question/answer (Q&A).

The generative AI may determine how to generate a question/answer (Q&A) for the input question. For example, 1) both the shared text part related to the input question (or the topic-based text part before combining speech data) (first extracted content) and the user statements (second extracted content) in the corresponding time zone may be transmitted to the generative AI to generate a response and learn the question and the generated response together, 2) both the user statement part related to the input question (third extracted content) and the shared text part in the corresponding time zone (or the topic-based text part before combining speech data) (fourth extracted content) may be transmitted to the generative AI to generate a response and learn the question and the generated response together, and 3) the topic-based text (shared text + speech data) (fifth extracted content) related to the input question may be transmitted to the generative AI to generate a response and learn the question and the generated response together.

The generative AI may learn questions and generated responses together (Q&A learning) and generate Q&As, based on such learning (learning is iterative).

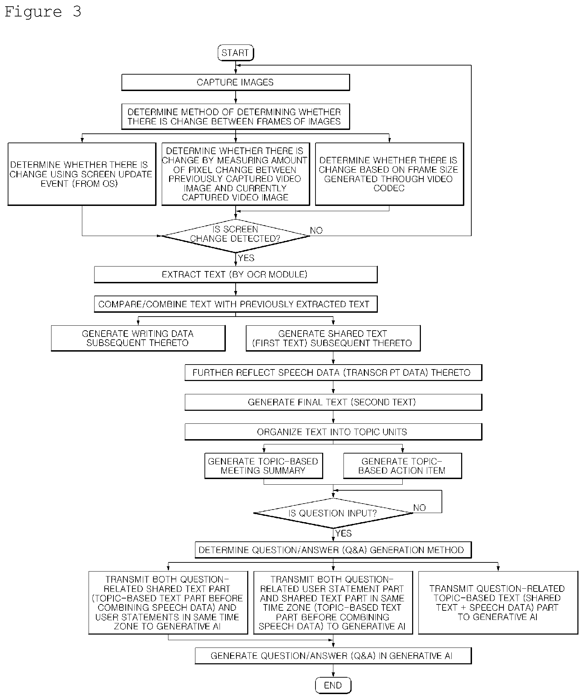

FIG. 3 is a flowchart illustrating a method for automatically generating text using generative AI according to an embodiment of the disclosure.

The embodiment presented in FIG. 3 illustrates a method of automatically generating meeting minutes, action items, and questions/answers (Q&As) using generative AI.

When conducting a conference through a video conference system, various content such as shared documents/videos/images, images of other conference participants, and the like is displayed as images on the video conference application screen of each conference participant. These images are captured and transmitted to other conference participants through video compression, thereby sharing the content. Since video compression and video transmission are based on the prior art, detailed descriptions thereof will be omitted.

Next, it is determined whether there is a change between frames constituting the captured images. There may be various methods for determining whether or not there is a change between frames. For example, it is possible to determine whether or not there is a change between frames through a screen update event provided from an operating system (OS), to determine the same by measuring the amount of pixel change between the previously captured video image and the currently captured video image, or to determine the same, based on a frame size generated through a video codec.

If it is determined that there is a change between frames, this indicates a change in the display on the screen viewed by the user, so it may be determined that the entirety or part of a document or the like shared in the video conference has been changed. Subsequently, text is extracted from the changed video frame. At this time, text extraction may be performed using an OCR module, but the text extraction method is not limited thereto.

The extracted text is compared with previously extracted text and combined into a single whole text. At this time, the combination of the previously extracted text and the currently extracted text is performed by removing redundant parts. Even if a single whole text is produced, the change position or change time within the text due to the change between frames (or screen change) may be stored separately. The change position or change time within the text may be the criteria for dividing the text in units of topics later.

The text combined into a single whole text may be generated as a shared text. In addition, the writing data recorded on the screen during the video conference may be generated at a position where the writing was recorded on the text combined into the single whole text, or may be generated in units of frames (or screens), based on the change between frames (or screen changes). The text generated as the shared text by combining the entire content may be generated into a final text by further reflecting the speech data (transcript data) of the meeting participants.

The generated final text may be divided and organized into topic units, and in this case, the final text may be divided into topic units by analyzing the linguistic content of the final text or may be divided into topic units, based on the change between frames (or screen changes).

Subsequently, a topic-based meeting summary may be generated from the final text divided into topic units, and a topic-based action item may be generated from the final text divided into topic units.

Next, when a question is input, the generative AI may generate a response (answer) to it and learn from that, thereby generating a question/answer (Q&A). The generative AI may determine how to generate a question/answer (Q&A). For example, 1) both the shared text part related to the input question (or the topic-based text part before combining speech data) and the user statements in the corresponding time zone may be transmitted to the generative AI to generate a response and learn the question and the generated response together, 2) both the user statement part related to the input question and the shared text part in the corresponding time zone (or the topic-based text part before combining speech data) may be transmitted to the generative AI to generate a response and learn the question and the generated response together, and 3) the topic-based text (shared text + speech data) related to the input question may be transmitted to the generative AI to generate a response and learn the question and the generated response together.

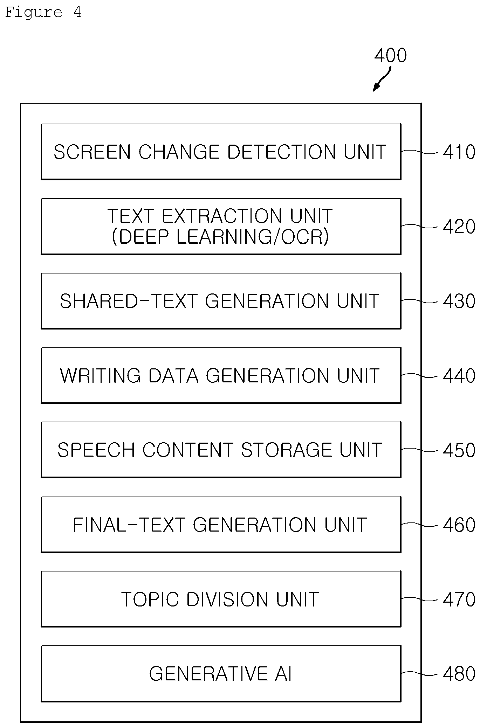

FIG. 4 is a flowchart illustrating an apparatus for automatically generating text using generative AI according to an embodiment of the disclosure.

The apparatus 400 illustrated in FIG. 4 may automatically generate meeting minutes, action items, and questions/answers (Q&A) using generative AI.

The automatic text generation apparatus 400 according to an embodiment of the disclosure includes a screen change detection unit 410, a text extraction unit 420, a shared-text generation unit 430, a writing data generation unit 440, a speech content storage unit 450, a final-text generation unit 460, a topic division unit 470, and a generative AI 480.

When conducting a conference through a video conference system, various content such as shared documents/videos/images, images of other conference participants, and the like is displayed as images on the video conference application screen of each conference participant.

The screen change detection unit 410 of the automatic text generation apparatus 400 determines whether or not there is a change between frames constituting captured images. There may be various methods for determining whether or not there is a change between frames. For example, it is possible to determine whether or not there is a change between frames through a screen update event provided from an operating system (OS), to determine the same by measuring the amount of pixel change between the previously captured video image and the currently captured video image, or to determine the same, based on a frame size generated through a video codec.

If the screen change detection unit 410 determines that there is a change between frames, the text extraction unit 420 extracts text from the changed video frame. At this time, the text extraction may be performed using an OCR module, but the text extraction method is not limited thereto.

Next, the shared-text generation unit 430 compares the extracted text with previously extracted text and combines them into a single whole text. At this time, the combination of the previously extracted text and the currently extracted text is performed by removing redundant parts. Even if a single whole text is produced, the change position or change time within the text due to the change between frames (or screen change) may be stored separately. The change position or change time within the text may be the criteria for dividing the text in units of topics later.

Then, the writing data generation unit 440 generates the writing data, recorded on the screen during the video conference, on the text combined into the single whole text. At this time, the writing data may be separately generated at the position where the writing is recorded, or may be generated in units of frames (or screens), based on the change between frames (or screen changes).

In addition, the speech content storage unit 450 stores the speech data of the conference participants, and the final-text generation unit 460 generates a final text by further reflecting the speech data (transcript data) of meeting participants to the text created as a shared text by combining the entire content.

Then, the topic division unit 470 organizes the generated final text by dividing it into topic units. At this time, the topic division unit 470 may analyze the linguistic content of the final text to divide and organize the final text into topic units, or divide it into topic units, based on the change between frames (or screen changes).

The final text divided into topic units may be used to generate meeting summaries by topics, or may be used to generate action items by topics.

When a question is input, the generative AI 480 may generate a response (answer) to it and learn from that, thereby generating a question/answer (Q&A). The generative AI 480 may determine how to generate a question/answer (Q&A). For example, 1) both the shared text part related to the input question (or the topic-based text part before combining speech data) and the user statements in the corresponding time zone may be transmitted to the generative AI to generate a response and learn the question and the generated response together, 2) both the user statement part related to the input question and the shared text part in the corresponding time zone (or the topic-based text part before combining speech data) may be transmitted to the generative AI to generate a response and learn the question and the generated response together, and 3) the topic-based text (shared text + speech data) related to the input question may be transmitted to the generative AI to generate a response and learn the question and the generated response together.

The generative AI 480 may generate not only a question/answer (Q&A) but also a third text such as a topic-based meeting summary or a topic-based action item from the second text (the text generated by adding voice text to the first text).

### Apparatus to which proposed method of disclosure is applicable

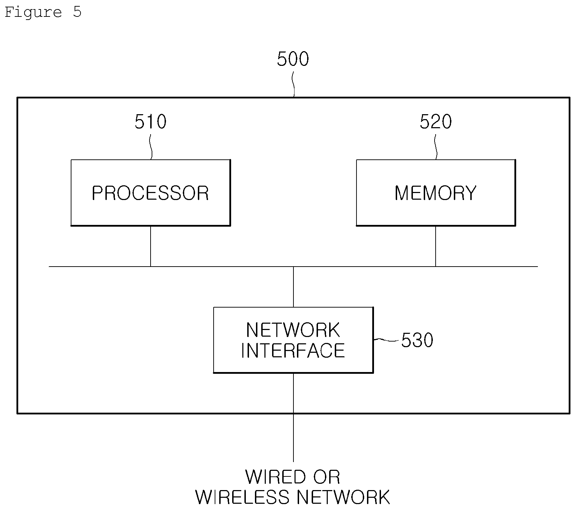

FIG. 5 illustrates an apparatus 500 to which the proposed method of the disclosure may be applied. The apparatus 500 may be a server or terminal that automatically generates text using generative AI.

Referring to FIG. 5, the apparatus 500 may be a server or terminal configured to implement a process for a method of automatically generating text using generative AI.

For example, the apparatus 500 to which the proposed method of the disclosure may be applied may include network devices such as repeaters, hubs, bridges, switches, routers, gateways, and the like, computer devices such as desktop computers, workstations, and the like, mobile terminals such as smartphones and the like, portable devices such as laptop computers and the like, appliances such as digital TVs, and transportation means such as vehicles. As another example, the apparatus 500 to which the disclosure may be applied may be included as part of an ASIC (Application Specific Integrated Circuit) implemented in the form of an SoC (System-on-Chip).

The memory 520 may be connected to the processor 510 during operation, and may store programs and/or instructions for processing and controlling of the processor 510, and may store data and information used in the disclosure, control information required for processing data and information according to the disclosure, and temporary data generated during the data and information processing process. The memory 520 may be implemented as a storage device such as a ROM (Read-Only Memory), a RAM (Random Access Memory), an EPROM (Erasable Programmable Read-Only Memory), an EEPROM (Electrically Erasable Programmable Read-Only Memory), a flash memory, a SRAM (Static RAM), an HDD (Hard Disk Drive), an SSD (Solid State Drive), and the like.

The processor 510 may be operatively connected to the memory 520 and/or the network interface 530, and may control the operation of respective modules in the apparatus 500. In particular, the processor 510 may perform various control functions for performing the proposed method of the disclosure. The processor 510 may also be called a controller, a micro-controller, a micro-processor, a microcomputer, or the like. The proposed method of the disclosure may be implemented by hardware, firmware, software, or a combination thereof. When implementing the disclosure using hardware, an ASIC (application specific integrated circuit) or a DSP (digital signal processor), a DSPD (digital signal processing device), a PLD (programmable logic device), an FPGA (field programmable gate array), or the like, configured to perform the disclosure, may be provided in the processor 510. Meanwhile, when implementing the proposed method of the disclosure using firmware or software, the firmware or software may include instructions related to modules, procedures, or functions that perform functions or operations necessary for implementing the proposed method of the disclosure, and the instructions may be stored in the memory 520 or stored in a computer-readable recording medium (not shown) separate from the memory 520, and may be configured to cause, when executed by the processor 510, the apparatus 500 to perform the proposed method of the disclosure.

In addition, the apparatus 500 may include a network interface device 530. The network interface device 530 may be connected to the processor 510 during operation, and the processor 510 may control the network interface device 530 to transmit or receive wireless/wired signals carrying information, data, signals, and/or messages through a wireless/wired network. The network interface device 530 may support various communication standards such as IEEE 802 series, 3GPP LTE(-A), 3GPP 5G, etc., and may transmit and receive control information and/or data signals according to the corresponding communication standards. The network interface device 530 may be implemented outside the apparatus 500 as needed.

The embodiments described in this specification and the attached drawings are merely exemplary and do not limit the scope of the disclosure in any way. In addition, the connections or connection members between the components illustrated in the drawings are examples of functional connections and/or physical or circuit connections, and may be represented as various functional connections, physical connections, or circuit connections that are replaceable or addible in an actual device. In addition, unless specifically stated with "essential," "important," etc., the components may not be essential for the application of the disclosure.

In the specification (especially, in the claims) of the present disclosure, the term "said" and indicative terms similar thereto may be used for both a single element or multiple elements. In addition, if a range is stated in the disclosure, it encompasses embodiments to which respective values within the range are applied (unless otherwise stated), and the respective values constituting the range are regarded as being described in the detailed description of the disclosure. In addition, the steps presented in the method of the disclosure are not intended to be restricted in their sequence, and the sequence thereof may be appropriately changed as needed, unless a certain step must precede according to the nature of the process. All examples or the use of exemplary terms (e.g., etc.) in the disclosure is merely intended to described the disclosure in detail, and the scope of the disclosure is not limited to the examples or exemplary terms, unless limited by the claims. In addition, those skilled in the art will understand that various modifications, combinations, and changes may be configured according to design conditions and elements without departing from the scope of the appended claims or their equivalents.

## Claims

1. A method for automatically generating text using generative AI, the method comprising:
determining whether or not there is a change between frames constituting images;
extracting text from a changed frame; and
generating first text by combining the extracted text with previously extracted text.

2. The method of claim 1,
wherein the determining whether or not there is a change between frames is performed by at least one of:
determining whether or not there is a change between frames using a screen update event provided from an operating system (OS);
determining whether or not there is a change between frames using the amount of pixel change between a previous frame and a current frame; and
determining whether or not there is a change between frames using a frame size generated through a video codec.

3. The method of claim 1,
wherein the extracting of the text is executed using an OCR module.

4. The method of claim 1,
wherein the previously extracted text is text extracted from a frame prior to the changed frame.

5. The method of claim 1,
wherein the combination of the extracted text and the previously extracted text is performed by removing redundant portions.

6. The method of claim 1,
wherein a position of combination of the extracted text and the previously extracted text is a criterion for dividing the first text into topic units.

7. The method of claim 1,
further comprising generating second text by adding voice text to the first text.

8. A computer program stored in a medium for executing, in conjunction with hardware, a method of automatically generating text using generative AI according to claim 1.

9. An apparatus for automatically generating text using generative AI, the apparatus comprising a processor,
wherein the processor is configured to:
determine whether or not there is a change between frames constituting images;
extract text from a changed frame; and
generate first text by combining the extracted text with previously extracted text.

10. The apparatus of claim 9,
wherein the processor is configured to determine whether or not there is a change between frames by at least one of:
determining whether or not there is a change between frames using a screen update event provided from an operating system (OS);
determining whether or not there is a change between frames using the amount of pixel change between a previous frame and a current frame; and
determining whether or not there is a change between frames using a frame size generated through a video codec.

11. The apparatus of claim 9,
wherein the previously extracted text is text extracted from a frame prior to the changed frame.

12. The apparatus of claim 9,
wherein the combination of the extracted text and the previously extracted text is performed by removing redundant portions.

13. The apparatus of claim 9,
wherein a position of combination of the extracted text and the previously extracted text is a criterion for dividing the first text into topic units.

14. The apparatus of claim 9,
wherein the processor is configured to further generate second text by adding voice text to the first text.

15. The apparatus of claim 14,
wherein a position of combination of the extracted text and the previously extracted text is a criterion for dividing the second text into topic units.
